(19) **Europäisches Patentamt**

**European Patent Office**

**Office européen des brevets**

(11) Veröffentlichungsnummer : **0 395 927 B1**

(12) # EUROPÄISCHE PATENTSCHRIFT

(45) Veröffentlichungstag der Patentschrift :
**13.01.93 Patentblatt 93/02**

(21) Anmeldenummer : **90107173.8**

(22) Anmeldetag : **14.04.90**

(51) Int. Cl.⁵ : **G01N 27/416,** G01N 27/30

(54) **Elektrochemische Messzelle zur Bestimmung des Ammoniak oder Hydrazin in einer Messprobe.**

(30) Priorität : **29.04.89 DE 3914284**

(43) Veröffentlichungstag der Anmeldung :
**07.11.90 Patentblatt 90/45**

(45) Bekanntmachung des Hinweises auf die
Patenterteilung :
**13.01.93 Patentblatt 93/02**

(84) Benannte Vertragsstaaten :
**DE FR GB NL**

(56) Entgegenhaltungen :
**EP-A- 0 305 769**
**EP-A-00 478 98**
**EP-A-03 406 54**
**DD-A-22 780 2**
**DE-A-20 099 37**

(73) Patentinhaber : **Drägerwerk**
**Aktiengesellschaft**
**Moislinger Allee 53-55**
**W-2400 Lübeck 1 (DE)**

(72) Erfinder : **Kiesele, Herbert, Dr.**
**Julius-Milde-Weg 8**
**W-2400 Lübeck (DE)**
Erfinder : **Kühn, Uwe**
**Mühlenkamp 9**
**W-2067 Wesenberg (DE)**
Erfinder : **Haupt, Stephan, Dr.**
**Dr. Julius-Leber-Strasse 51**
**W-2400 Lübeck (DE)**

# Beschreibung

Die Erfindung betrifft eine elektrochemische Meßzelle zur Bestimmung von Ammoniak oder Hydrazin in einer gasförmigen oder flüssigen Meßprobe, mit mindestens einer Meßelektrode und einer Gegenelektrode, die in einer mit einem löslichen Elektrolyten gefüllten Elektrolytkammer aufgenommen sind, welche zur Messprobe hin durch eine permeable Membran abgeschlossen ist.

Eine derartige elektrochemische Meßzelle ist in der DE-OS 20 09 937 beschrieben. Sie besitzt als Meßelektrode eine pH-Elektrode, die der Wasserstoffionenmessung dient. Diese potentiometrische Messung einer Ammoniakkonzentration benötigt für eine vollständig abgelaufene Meßreaktion eine lange Zeitspanne für die Einstellung eines Gleichgewichtes, in welcher das nachzuweisende $NH_3$ mit dem Wassergehalt des Elektrolyten $NH_4OH$ bildet, das wiederum in $NH_4^+$- Ionen und $OH^-$- Ionen dissoziiert. Der geschwindigkeitsbestimmende, langsame Schritt bei dieser Meßreaktion ist die Gleichgewichtseinstellung mit dem Gasraum bzw. die Gleichgewichtseinstellung an der Glasmembran.

Die für die pH-Messung notwendige Glaselektrode wird im Laufe Ihrer Einsatzzeit in den Eigenschaften der Glasmembran verändert, so daß Drifterscheinungen auftreten. Zur Durchführung der pH-Messung ist ein stabiles Bezugspotential notwendig, dessen Verschiebung im Laufe der Einsatzzeit ebenfalls zu Drifterscheinungen führt. Da die bekannte Meßzelle auf alle, den pH-Wert des Elektrolyten beeinflussenden Gase anspricht, ist deren Selektivität für Messungen in entsprechenden Gasgemischen nicht ausreichend.

Der Erfindung liegt somit die Aufgabe zugrunde, eine elektrochemische Meßzelle der genannten Art so zu verbessern, daß eine selektive Ammoniakmessung mit kurzer Ansprechzeit, linearem Verhalten und geringster Driftneigung erhalten wird, und daß ihre Elektroden so beschaffen sind, daß die Oxidation des Ammoniak oder des Hydrazin als Meßreaktion keinen Einfluß auf ihre Empfindlichkeit hat.

Die Lösung der Aufgabe erfolgt dadurch, daß zumindest die Meßelektrode mit einem Kobaltoxid enthaltenden Überzug versehen ist, welcher sich in direktem Kontakt mit dem Elektrolyten befindet.

Der Vorteil der Erfindung liegt im wesentlichen darin, daß die Oxidation des Ammoniak an der Meßelektrode durch den Kobaltoxidüberzug katalysiert wird, so daß keine störenden Folgeprodukte an der Meßelektrode entstehen, die eine nachfolgende Oxidation behindern könnten. Außerdem erfolgt keine Blockierung der Elektrode durch eine elektrochemisch inerte Passivierungsschicht. Die erfindungsgemäße Meßzelle zeichnet sich durch äußerst gute Langzeitstabilität und eine vernachlässigbare Drift aus. Durch die katalytisch wirksame Oxidschicht sind auch sehr hohe Ammoniakkonzentrationen meßbar und für die Funktionsfähigkeit der Meßzelle in bezug auf Katalysatorgifte oder nachteilige Beeinflussung des Elektrolyten unschädlich. Durch den Überzug aus Kobaltoxid erfolgt die Oxidation des Ammoniak an der Meßelektrodenoberfläche so schnell, daß an ihr die Ammoniakkonzentration praktisch Null ist. Dies hat zur Folge, daß ein hoher Konzentrationsgradient zwischen der Meßprobe und der Meßelektrodenoberfläche entsteht. Damit ist die Meßzellenreaktion auf eine transportkontrollierte Reaktion ohne hemmende, vorgelagerte Reaktionsschritte zurückgeführt. Dies führt zu einer schnellen Ansprechzeit und zu einer hohen Empfindlichkeit der Meßzelle. Als Trägermaterial für die Elektrode kann Gold, Platin oder Iridium gewählt werden. Die erfindungsgemäße Meßzelle eignet sich ebensogut für den Nachweis von Hydrazin.

Zur Herstellung eines Kobaltoxidüberzuges kann zum Beispiel ein Trägermaterial aus Gold für die Elektrode in einer Kobalt-Nitrat- oder Kobald-Acetat-Lösung eingetaucht und Kobaltoxid elektrolytisch abgeschieden werden. Der Kobaltlösung kann Kaliumnitrat als Leitelektrolyt zugesetzt sein. Eine andere Methode, den Kobaltoxidüberzug zu erzeugen, besteht darin, das Trägermaterial für die Elektrode aus einer kobalthaltigen Legierung zu bilden, welche anschließend oxidiert wird.

Durch Anbringung des kobaltoxidhaltigen Überzuges werden auch Trägermaterialien zur elektrochemischen Messung von Ammoniak einsetzbar, die ohne diesen Überzug eine Oberflächenpassivierung in Form einer Nitridbildung erführen, wodurch die Meßempfindlichkeit bis zur Unbrauchbarkeit der Meßzelle verringert würde (siehe hierzu Encyklopedia of Electrochemistry of the Elements, Vol. 8, 1978, Seite 413).

Für die erfindungsgemäße Meßzelle ist deren fehlende Querempfindlichkeit gegen Kohlenmonoxid und Wasserstoff hervorzuheben.

Um für die Bestimmung von Ammoniak oder Hydrazin ein Referenzpotential zu erzeugen, wird in die Meßzelle eine Referenzelektrode eingebracht, deren Potential als Bezugspunkt für die Messung dient. Es ist zweckmäßig, eine solche Referenzelektrode ebenfalls mit einem kobaltoxidhaltigen Überzug zu versehen. Eine derartige Meßzelle hat den Vorteil, daß sie mit kurzgeschlossenen Elektroden lagerfähig ist, wodurch sie wegen der kleinen Einlaufzeit sofort betriebsbereit ist. Außerdem wird die Abhängigkeit des Grundstromes von der Temperatur minimiert, da das Potential der Meßelektrode und der Referenzelektrode in gleicher Weise von der Temperatur beeinflußt werden.

Ein Ausführungsbeispiel der Erfindung wird anhand einer schematischen Zeichnung dargestellt und im folgenden näher erläutert.

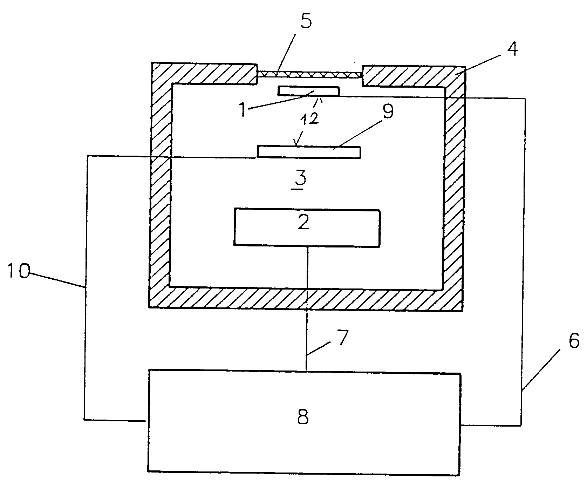

Die einzige Figur zeigt eine elektrochemische Meßzelle mit einem Elektrolyten (3), in welchen eine Meßelektrode (1), eine Gegenelektrode (2) und eine Referenzelektrode (9) eingebracht sind. Die Elektroden (1,9) besitzen einen kobaltoxidhaltigen Überzug (12). Zur die Meßprobe enthaltenden Umgebung hin ist der Elektrolyt (3) durch eine für Ammoniak permeablen Membran (5) abgeschlossen, welche an dem Gehäuse (4) dichtend befestigt ist. Die Meßelektrode (1), die Gegenelektrode (2) und die Referenzelektrode (9) besitzen Meßanschlüsse (6,7,10), welche durch das Gehäuse (4) hindurchgeführt und an eine Auswerteeinheit (8) zur weiteren Verarbeitung der Meßsignale angeschlossen sind.

## Patentansprüche

1. Elektrochemische Meßzelle zur Bestimmung von Ammoniak oder Hydrazin in einer gasförmigen oder flüssigen Meßprobe, mit mindestens einer Meßelektrode und einer Gegenelektrode, die in einer mit einem löslichen Elektrolyten gefüllten Elektrolytkammer aufgenommen sind, welche zur Meßprobe hin durch eine permeable Membran abgeschlossen ist, dadurch gekennzeichnet, daß zumindest die Meßelektrode (1) mit einem Kobaltoxid enthaltenden Überzug (12) versehen ist, welcher sich in direktem Kontakt mit dem Elektrolyten (3) befindet.

2. Elektrochemische Meßzelle nach Anspruch 1, dadurch gekennzeichnet, daß eine Referenzelektrode (9) vorgesehen ist, welche ebenfalls mit einem kobaltoxidhaltigen Überzug (12) versehen ist.

3. Elektrochemische Meßzelle nach Anspruch 1 oder 2, dadurch gekennzeichnet, daß das Trägermaterial der Elektroden (1,9) aus einem Edelmetall besteht, welches mit einem auf elektrolytischem Weg abgeschiedenen kobaltoxidhaltigen Überzug (12) versehen ist.

4. Elektrochemische Meßzelle nach Anspruch 1 oder 2, dadurch gekennzeichnet, daß das Trägermaterial der Elektroden (1,9) aus einer kobalthaltigen Legierung besteht, die zur Bildung eines kobaltoxidhaltigen Überzugs (12) oxidiert worden ist.

## Claims

1. Electrochemical measuring cell for the determination of ammonia or hydrazine in a gaseous or liquid test sample, having at least one measuring electrode and one counter electrode, which are accommodated in an electrolytic chamber filled with a soluble electrolyte, which chamber is closed off toward the test sample by a permeable membrane, characterized in that at least the measuring electrode (1) is provided with a coating (12) containing cobalt oxide, the coating being in direct contact with the electrolyte (3).

2. Electrochemical measuring cell according to claim 1, characterized in that a reference electrode (9) is provided, which is likewise provided with a coating (12) containing cobalt oxide.

3. Electrochemical measuring cell according to claim 1 or 2, characterized in that the base material of the electrodes (1,9) consists of a precious metal which is provided with a coating (12) containing cobalt oxide deposited on the electrolytic path.

4. Electrochemical measuring cell according to claim 1 or 2, characterized in that the base material of the electrodes (1,9) consists of a cobalt-containing alloy which has been oxidized for the formation of a coating (12) containing cobalt oxide.

## Revendications

1. Cellule de mesure électrochimique permettant de déterminer la teneur en ammoniac ou en hydrazine d'échantillons gazeux ou liquides, comportant au moins une électrode de mesure et une contre-électrode plongées dans une chambre d'électrolytique remplie d'un électrolyte soluble, et obturée, du côté de l'échantillon à mesurer, par une membrane perméable, caractérisée en ce qu'au moins l'électrode de mesure (1) est pourvue d'une couche de revêtement (12) contenant de l'oxyde de cobalt, en contact direct avec l'électrolyte (3).

2. Cellule de mesure électrochimique selon la revendication 1, caractérisée en ce qu'une électrode de référence (9) est prévue, également pourvue d'une couche de revêtement contenant de l'oxyde de cobalt (12).

3. Cellule de mesure électrochimique selon la revendication 1 ou 2, caractérisée en ce que le matériau du support des électrodes (1, 9) consiste en un métal précieux, muni d'une couche de revêtement contenant de l'oxyde de cobalt (12) déposé par voie électrolytique.

4. Cellule de mesure électrochimique selon la revendication 1 ou 2, caractérisée en ce que le matériau du support des électrodes (1, 9) consiste en un alliage contenant du cobalt, oxydé pour former une couche de revêtement contenant de l'oxyde de cobalt (12).